# EUROPEAN PATENT APPLICATION

(11) **EP 0 614 031 A1**
(43) Date of publication of application: **07.09.1994**
(21) Application number: 93200626.5
(22) Date of filing: 04.03.1993
(51) Int. Cl.: F16J 13/06, B29C 47/90

(54) **Flange-coupling for a tank**

(71) Applicant: VIPLEX GROEP B.V., NL-7442 CK Nijverdal (NL)
(72) Inventor: Kroeze, Johannes Bernardus, NL-7556 CV Hengelo (NL); Spaanjaars, Gerardus Josephus Maria, NL-7482 LL Haaksbergen (NL)
(74) Representative: Schumann, Bernard Herman Johan

(57) **Abstract**

The invention relates to a tank (1), comprising:
a jacket (2);
two end plates (3,4) in each of which a continuous hole (5,6) is present;
a flange plate (7,8) which is coupled to each end plate by means (16-18) and in which a continuous hole (9) is present for sealed passage of a product gradually delivered by an extrusion device. The tank according to the invention has the characteristic that the coupling means comprise:
positioning means (12) for positioning the flange plate relative to the end plate;
sealing means (14) for axially sealing the flange plate relative to the end plate; and
pressing means for pressing the flange plate in axial direction to the end plate.

## Description

The invention relates to a tank, comprising:
a jacket;
two end plates in each of which a continuous hole is present;
a flange plate which is coupled to each end plate by means of coupling means and in which a continuous hole is present for sealed passage of a product gradually delivered by an extrusion device.

Such a tank is intended for retaining a desired shape by underpressure and/or by cooling a product, for instance a tube, gradually delivered by an extrusion device by means of cooling water supplied by sprayers. The flange plate at the front and at the rear serve to seal relative to the through-fed product in order to maintain the underpressure present in the tank which may have a value in the order of magnitude of 0.4 bar. For this purpose a perforated sleeve serving as a calibrator connects on the feed side to the continuous hole in the flange plate and on the rear side the continuous hole in the flange plate is provided with a flexible sealing ring which is deformable in the manner of a diaphragm and can thus seal against the delivered product. The delivered product is pulled through the tank and out of the extrusion device by a pulling device.

Known flange plates are coupled to the relevant end plate by means of bolts and nuts. Because a tank is used for different diameters, frequent changing of the flange plates is necessary. The passage dimensions of the continuous holes and the associated sealing rings are in any case adapted to the sectional dimensions of the product to be passed through. The fixing of flange plates by means of screws and bolts and their subsequent removal is very tedious and time-consuming. Due to the relative uncertainty with regard to the exact positioning there is the further danger that through lack of alignment the exact dimensioning of a delivered product is not sufficiently guaranteed.

A further drawback of the known manner of fixing is that it is very difficult to ensure the desired complete sealing of the flange plate in relation to the end plate. Use is often made in this respect of silicon rubber sealing masses. This entails extra cost, loss of time and pollution. The removal of a flange plate which seals relative to the end plate by means of silicon rubber can also often be laborious because the silicon rubber displays a certain adhesion to the surfaces. Prior to placing of a subsequent flange plate the relevant surfaces must therefore be thoroughly cleaned.

The invention provides a tank free of the stated drawbacks.

To this end the tank according to the invention has the characteristic that the coupling means comprise:
positioning means for positioning the flange plate relative to the end plate;
sealing means for axially sealing the flange plate relative to the end plate; and
pressing means for pressing the flange plate in axial direction to the end plate.

In particular the sealing means can comprise a sealing ring. The sealing ring can be received in an annular recess or groove extending round the continuous hole.

In preference the tank has the special feature that the pressing means comprise at least one closing member with handle, which closing member comprises a rise surface which is rotatable by operation of the handle.

It is noted that the invention does not relate to the closing member itself, which is in any case generally known, but to the specific application in the above outlined context of a tank.

Particularly in the case of larger and thus heavier end plates handling thereof requires some strength and dexterity. To now exclude any possibility of a flange plate falling during placing or removal, the embodiment is recommended in which at least one closing member is embodied such that in the free situation the outward displacement of the flange plate is blocked and this displacement can be unblocked by further operation of the handle. Thus is effectively prevented that a placed flange plate can come loose from the end plate in uncontrollable manner during loosening of the closing members with the possible risk of it falling off.

The number of closing members may amount for instance to three, wherein the closing members are preferably positioned equidistantly, thus at equal angles of 120°. Use can also be made of only one closing member, wherein a fixed hooking edge is present on the opposite edge of the flange plate.

The invention will now be elucidated with reference to the annexed drawing. In the drawing:
figure 1 shows a partly broken away perspective view of an underpressure tank according to the invention;
figure 2 shows the inlet flange plate of figure 1 in perspective view;
figure 3 is a cross section through the inlet end wall; and
figure 4 is a cross section through the outlet end wall.

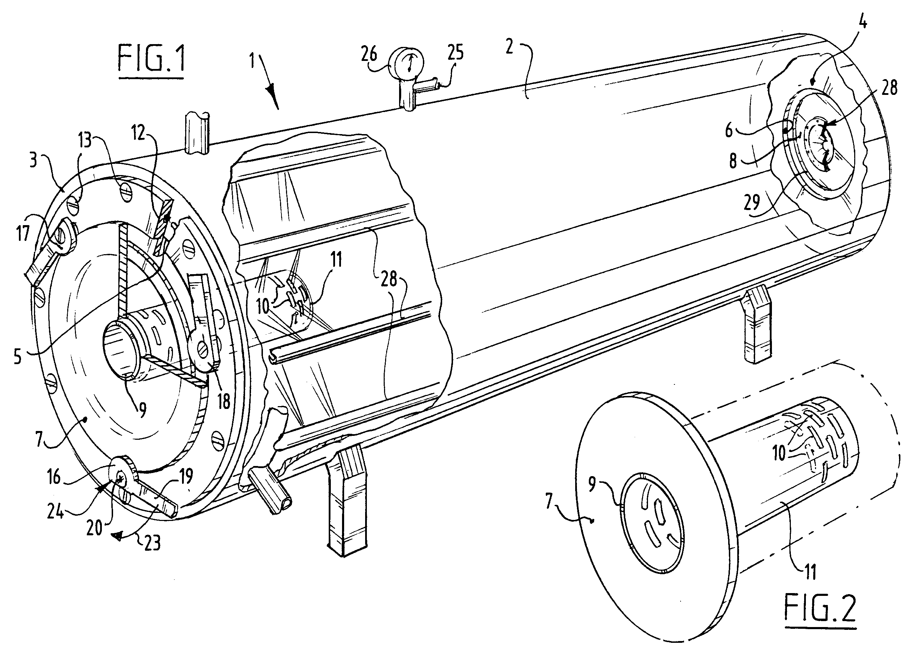

Figure 1 shows an underpressure tank 1 comprising a cylindrical jacket 2, a front end plate 3 and a rear end plate 4. Arranged in each of both end plates is a continuous hole. These holes are designated 5 and 6 respectively. A flange plate 7 is coupled to the front end plate and a flange plate 8 to the rear end plate 4. Flange plate 7, which is drawn in figure 2, carries a sleeve 11 connecting onto a central hole 9 and provided with perforations 10.

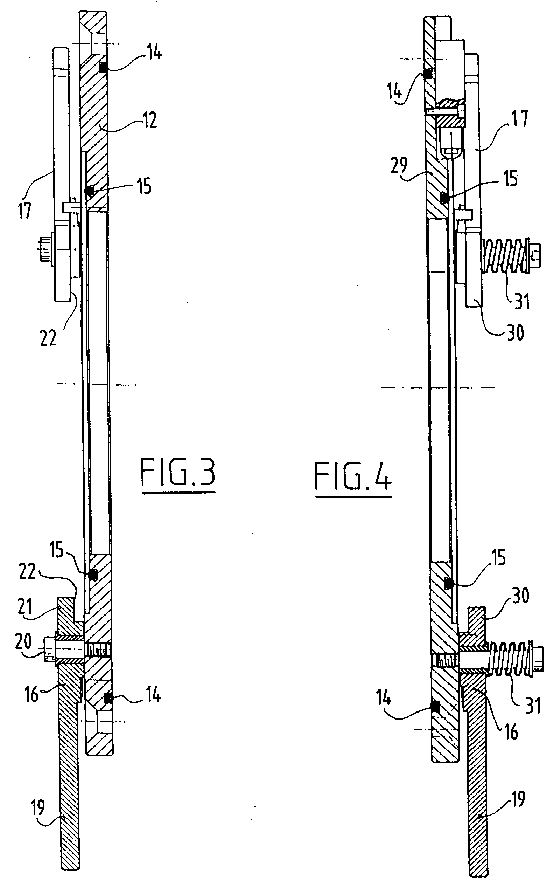

The flange plate 7 is correctly positioned in a positioning ring 12 (see also figure 3) which is fastened to the front end plate 3 by means of screws 13. The positioning ring 12 seals against the front end plate by means of a sealing ring 14. On the outside the ring 12 has a recess 14 into which flange plate 7 fits. Extending in the bottom of this recess is a sealing ring 15. This serves for a gas-tight seal of flange plate 7 relative to positioning ring 12 and thereby to the front end plate 3.

Three closing members 16, 17, 18 are arranged on the ring 12. Each closing member comprises a handle 19 for turning the associated closing member 16, 17, 18 round a pivot shaft 20, whereby the closing member can be displaced between a free position in which flange plate 7 is not pressed and a locked position in which by turning the handle 19 the closing member presses flange plate 7 against sealing ring 15. To this end the closing member levers 21 which co-act with flange plate 7 have a rise surface 22 which presses on or releases the flange plate 7 when handle 19 is turned.

Figure 1 shows the closing members 16, 17, 18 in the operative position in which the flange plate 7 is held in position. When the lower closing member 16 is moved downward as according to arrow 23 the flange plate 7 can only be removed if the flat portion of closing member 16 faces toward flange plate 7. However, in the rest position shown in figure 3 this situation is not obtained, but the placed flange plate 7 will be held in position, or at least prevented from falling, by the rise surface 22. In order to enable removal of the flange plate 7 with sleeve 11 the lever 19 must therefore be displaced still further as according to arrow 23.

Connected to the jacket 2 is a line 25 for connection to an underpressure source as well as a pressure gauge 26.

A spray water line 27 is connected to sprayers 28 for cooling the still hot extruded plastic tube entering the tank 1 through the sleeve 11.

On the side where the tube leaves the device 1 flange plate 8 is connected to the rear end plate 4 in similar manner. The flange plate 8 carries here an annular diaphragm seal 28. Use is made of a positioning ring 29 constructed in the same way as positioning ring 12. The inward facing sealing ring and the outward facing sealing ring 15 are designated with reference numerals 14 and 15 analogously to figure 3. The positioning ring 29 also bears three closing members, all designated 30, which differ from the closing members 16, 17, 18 in that they are loaded by pressure springs 31.

In order to pull a formed product through the tank use is made of draw benches which for instance by means of driven rollers exert a pulling force on the gradually delivered product. In the tank according to the invention use can be made of an underpressure which also serves to control the exact form and dimensioning of the obtained product. Should a disturbance occur for instance in the means providing the underpressure in the tank, the danger may then arise that the product to be delivered via the rear flange undergoes a deformation such that it can no longer pass through the rear flange. In this case there is the danger of the draw bench continuing to exert a pulling force such that undesired movements of the tank and damage occur. It is therefore very effective to make use of a switch which can stop energizing of the draw bench. This switch can advantageously be actuated by a displacement of the end flange plate counter to the action of the pressure springs 31. The relevant switch, for instance a microswitch, can be attached with its fixed part to the positioning ring 29 and sense the position of the outer surface of a placed flange plate with a control lever. This microswitch controls the state of actuation of the drawing device.

## Claims

1. Tank, comprising:
a jacket;
two end plates in each of which a continuous hole is present;
a flange plate which is coupled to each end plate by means of coupling means and in which a continuous hole is present for sealed passage of a product gradually delivered by an extrusion device,
**characterized in that**
the coupling means comprise:
positioning means for positioning the flange plate relative to the end plate;
sealing means for axially sealing the flange plate relative to the end plate; and
pressing means for pressing the flange plate in axial direction to the end plate.

2. Tank as claimed in claim 1, **characterized in that** the sealing means comprise a sealing ring.

3. Tank as claimed in claim 1, **characterized in that** the pressing means comprise at least one closing member with handle, which closing member comprises a rise surface which is rotatable by operation of the handle.

4. Tank as claimed in claim 3, **characterized in that** at least one closing member is embodied such that in the free situation the outward displacement of the flange plate is blocked and this displacement can be unblocked by further operation of the handle.
